# EUROPÄISCHE PATENTSCHRIFT

(11) **EP 2 900 606 B1**
(45) Veröffentlichungstag und Bekanntmachung des Hinweises auf die Patenterteilung: **23.11.2016**
(21) Anmeldenummer: 13782943.8
(22) Anmeldetag: 12.09.2013
(51) Int. Cl.: C02F 9/02, C02F 9/12, C02F 1/32, C02F 1/36, C02F 1/38

(54) **VORRICHTUNG ZUR BEHANDLUNG VON BALLASTWASSER**
DEVICE FOR TREATING BALLAST WATER.
DISPOSITIF DE TRAITEMENT D'EAU DE LESTAGE

(30) Priorität: 27.09.2012 DE 102012018996
(43) Veröffentlichungstag der Anmeldung: 05.08.2015
(73) Patentinhaber: Büttner, Klaus, 25336 Klein Nordende (DE)
(72) Erfinder: Büttner, Klaus, 25336 Klein Nordende (DE)
(74) Vertreter: Lobemeier, Martin Landolf
(86) Internationale Anmeldenummer: PCT/DE2013/100325
(87) Internationale Veröffentlichungsnummer: WO 2014/048416

(56) Entgegenhaltungen:
- EP-A1- 2 412 627
- DE-U1-202008 016 363
- US-A1- 2007 240 975
- EFI TSOLAKI ET AL: "Technologies for ballast water treatment: a review", JOURNAL OF CHEMICAL TECHNOLOGY & BIOTECHNOLOGY, Bd. 85, Nr. 1, 1. Januar 2010 (2010-01-01) , Seiten 19-32, XP055018192, ISSN: 0268-2575, DOI: 10.1002/jctb.2276
- MAZEN M. ABU-KHADER ET AL: "Ballast water treatment technologies: hydrocyclonic a viable option", CLEAN TECHNOLOGIES AND ENVIRONMENTAL POLICY, Bd. 13, Nr. 2, 1. April 2011 (2011-04-01), Seiten 403-413, XP055089866, ISSN: 1618-954X, DOI: 10.1007/s10098-010-0325-1

## Beschreibung

Die Erfindung betrifft eine Vorrichtung zur Behandlung von Ballastwasser.

Wie bekannt wird Ballastwasser zur Trimmung von (Container-) Schiffen verwendet, um insbesondere die Seetauglichkeit auch während Leerfahrten gewährleisten zu können. Die Verwendung von Ballastwasser zur Stabilisierung von Schiffen ist insofern problematisch, dass im Wasser vorhandene Organismen aufgenommen, mittels der Schiffe verschleppt und am Zielort (oder unterwegs) wieder freigesetzt werden.

Diesem Problem wird durch unterschiedliche mechanische, physikalische und chemische Verfahren zur Ballastwasseraufbereitung Rechnung getragen, die im Ballastwasser vorhandene Organismen abtöten sollen.

Die europäische Patentanmeldung EP 2 412 627 A1 beschreibt ein Verfahren und eine Vorrichtung zur Ballastwasseraufbereitung, bei der Partikel mit Hilfe eines Hydrozyklons abgeschieden werden und das so vorgereinigte Ballastwasser dann durch Ultraschall und UV-Strahlung desinfiziert wird.

Während chemische Verfahren zwar besonders effektiv erscheinen, schaffen diese aber weitere (ökologische) Probleme beim Entleeren der Ballastwassertanks.

Die Durchführung mechanischer und physikalischer Methoden hingegen ist platz- und arbeitsaufwändig.

Aufgabe der vorliegenden Erfindung ist es daher, ein Verfahren zur Ballastwasseraufbereitung zu schaffen, das besonders effizient ist und als Vorrichtung platzsparend auf Schiffen installiert werden kann.

Diese Aufgabe wird durch die Vorrichtung mit den Merkmalen von Anspruch 1 gelöst. Ansprüche 2 und 3 geben vorteilhafte Ausgestaltungen der Erfindung wieder.

Grundgedanke der Erfindung ist es, mechanische und physikalische Verfahren vorteilhaft miteinander zu kombinieren. So ist erfindungsgemäß vorgesehen, dass das Ballastwasser in einem ersten Schritt einem Hydrozyklon zugeführt wird, mit dem zunächst Partikel aus dem Ballastwasser entfernt werden. Die Partikel bzw. das partikelhaltige Ballastwasser wird dann in Tanks zwischengelagert und fachgerecht (an Land) entsorgt oder einer speziellen auf Partikel gerichtete Behandlung unterzogen.

Das Partikel-entreicherte Ballastwasser wird in einem zweiten Schritt, bevorzugt mit einem Filter mit einer Maschenweite zwischen 30 und 40 µm, filtriert und in einem dritten Schritt mit einem Gas durchströmt und gleichzeitig mit Ultraschall beaufschlagt und mit UV-Strahlung bestrahlt.

Dabei hat sich gezeigt, dass die Durchströmung des beschallten und bestrahlten Ballastwassers mit einem Gas zu einem besonders gut aufbereiteten Ballastwasser führt. Dabei ist besonders vorteilhaft, wenn das Gas das filtrierte Ballastwasser als feinstverteilte Gasbläschen, besonders bevorzugt im Gleichstrom, durchströmt. Es ist aber auch denkbar, das Gas quer zum oder gegen den Flüssigkeitsstrom einzuleiten. Weiter ist es vorteilhaft, wenn das Gas ein Edelgas oder ein ein Edelgas aufweisendes Gasgemisch ist.

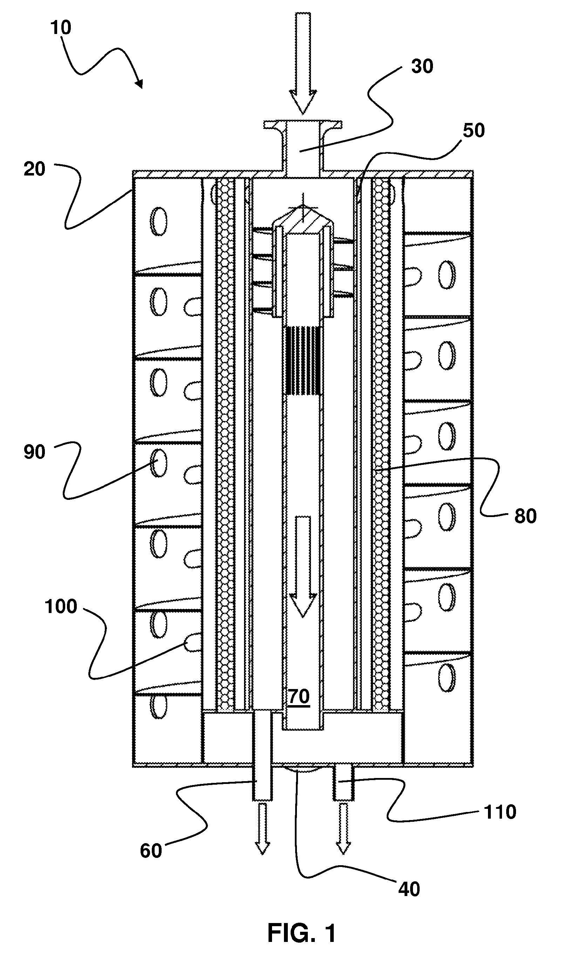

Die Erfindung wird anhand eines in der einzigen Fig. 1 in einer Schnittansicht dargestellten besonders bevorzugt ausgestalteten Ausführungsbeispiels näher erläutert.

Die erfindungsgemäße Vorrichtung 10 weist ein Gehäuse 20 auf, das bevorzugt rotationssymmetrisch aufgebaut ist und bei dem zumindest die im Gehäuse 20 aufgenommenen Komponenten zueinander konzentrisch angeordnet sind. Das Gehäuse 20 ist dabei bevorzugt kreisrund ausgebildet.

Auf der Oberseite des Gehäuses 20 der Vorrichtung 10 befindet sich axial ein Ballastwassereinlass 30, der mit einem mittig im Gehäuse 20 angeordneten Hydrozyklon 50 verbunden ist. Der Hydrozyklon 50 stellt die erste Reinigungsstufe gemäß dem vorgenannten Verfahren dar. Die im äußeren Bereich des Hydrozyklons 50 anfallenden Partikel werden über den Partikelauslass 60 aus der Vorrichtung abgeführt und können fachmännisch entsorgt oder aufbereitet werden. Das durch den Hydrozyklon 50 Partikelentreicherte Ballastwasser hingegen wird durch den Auslass 70 der nächsten Aufbereitungsstufe weitergeleitet.

Die zweite Aufbereitungsstufe stellt der Filter 80 dar, der den Hydrozyklon 50 umgibt. Der Filter 80 stellt dabei eine permeable Barriere dar, der die Vorrichtung in einen zwischen Hydrozyklon 50 und Filter 80 angeordneten Zwischenraum und einen zwischen Filter 80 und Gehäuse 20 angeordneten Außenraum unterteilt. Das Partikelentreicherte Ballastwasser ist also gezwungen, vom Hydrozyklon 50 kommend den Filter 80 zu passieren, wobei Kleinstpartikel vom Filter 80 mit einer bevorzugten Porenweite von 30 bis 40 µm zurückgehalten werden. Der Filterschlamm kann dabei in einem unterhalb des Hydrozyklons und des Filters angeordneten Filterschlammsumpf aufgefangen und über den Filterschlammauslass 110 aus der Vorrichtung 10 abgeführt und dort fachmännisch aufbereitet oder entsorgt werden.

Das den Filter 80 passierende Ballastwasser wird schließlich in einer dritten Aufbereitungsstufe im zwischen Filter 80 und Gehäuse 20 angeordneten Außenraum gleichzeitig mit Ultraschall beaufschlagt, mit UV-Strahlung bestrahlt und mit einem Gas durchströmt. Hierfür finden sich entsprechende Mittel zur Abgabe von Ultraschall 90, und zur Abgabe von UV-Strahlung 100 im Außenraum.

Vorteil dieser kompakten Anordnung ist der geringe Platzbedarf der Vorrichtung bei gleichzeitiger Effizienzsteigerung der Ballastwasseraufbereitung. Darüber hinaus sind die Mittel zur Abgabe von Ultraschall, zur Abgabe von UV-Strahlung und zum Einbringen eines Gases in den Außenraum der Vorrichtung 10 bevorzugt so angeordnet, dass diese auch auf den Filter 80 wirken. Demnach wird auch der Filter 80 mit Ultraschall und UV-Strahlung beaufschlagt, sodass nicht nur das im Außenraum vorhandene filtrierte Ballastwasser, sondern auch der Filter 80 behandelt wird. Folge daraus ist es, dass sich Partikel am Filter 80 nicht dauerhaft festsetzen können und der Filter 80 einer permanenten Reinigung unterliegt, wobei eine Entfernung der filtrierten Partikel einfach über den Filterschlammauslass 110 erfolgen kann.

## Patentansprüche

1. Vorrichtung (10) zur Behandlung von Ballastwasser, mit
- einem Gehäuse (20) mit
- einem auf dessen Oberseite axial angeordneten Ballastwassereinlass (30) und
- einem an dessen Unterseite angeordneten Ballastwasserauslass (40),
- einem mit dem Ballastwassereinlass (30) verbundenen Hydrozyklon (50) mit
- einem Partikel aus der Vorrichtung (10) abführenden, an der Unterseite des Gehäuses angeordneten Partikelauslass (60) und
- einem Partikel entreichertes Ballastwasser führenden Auslass (70),
- einem den Hydrozyklon (50) umgebenden Filter (80), der die Vorrichtung (10) in einen zwischen Hydrozyklon (50) und Filter (80) angeordneten Zwischenraum und einen zwischen Filter (80) und Gehäuse (20) angeordneten Außenraum unterteilt, wobei der Zwischenraum mit dem Partikel entreichertes Ballastwasser führenden Auslass (70) des Hydrozyklons (50) kommunizierend verbunden ist, und
- Mitteln zum Erzeugen von auf den Außenraum und/oder den Filter (80) wirkendem Ultraschall (90),
- Mitteln zum Erzeugen von auf den Außenraum und/oder den Filter (80) wirkendem UV-Licht (100), und
- Mitteln zum Einbringen eines Gases in den Außenraum der Vorrichtung (10).

2. Vorrichtung (10) nach Anspruch 1, **dadurch gekennzeichnet, dass** der Ballastwassereinlass (30), der Hydrozyklon (50), der den Hydrozyklon (50) umgebende Filter (80), die Mittel zum Erzeugen von auf den Außenraum und/oder den Filter (80) wirkendem Ultraschall (90) und die Mitteln zum Erzeugen von auf den Außenraum und/oder den Filter (80) wirkendem UV-Licht (100) konzentrisch angeordnet sind.

3. Vorrichtung (10) nach einem der Ansprüche 1 und 2, **gekennzeichnet durch** einen mit dem Zwischenraum kommunizierend verbundenen, Filterschlämme aus der Vorrichtung (10) abführenden Filterschlammauslass (110).

## Claims

1. A device (10) for treating ballast water comprising
- a housing (20) with
- a ballast water inlet (30) axially arranged on the upper side thereof and
- a ballast water outlet (40) arranged on the underside thereof,
- a hydrocyclone (50) connected to the ballast water inlet (30) with
- a particle outlet (60) discharging particles from the device (10) and arranged on the underside of the housing and
- an outlet (70) conducting particle-reduced ballast water,
- a filter (80) surrounding the hydrocyclone (50) separating the device (10) into an intermediate space arranged between hydrocyclone (50) and filter (80) and an outer space arranged between filter (80) and housing (20) wherein the intermediate space is connected in a communicating manner to the outlet (70) of the hydrocyclone (50) conducting particle-reduced ballast water, and
- means for generating ultrasound (90) acting on the outer space and/or the filter (80),
- means for generating UV-light (100) acting on the outer space and/or the filter (80), and
- means for introducing a gas into the outer space of the device (10).

2. The device (10) according to claim 1, **characterized in that** the ballast water inlet (30), the hydrocyclone (50), the filter (80) surrounding the hydrocyclone (50), the means for generating ultrasound (90) acting on the outer space and/or the filter (80), and the means for generating UV-light (100) acting on the outer space and/or the filter (80) are concentrically arranged.

3. The device (10) according to one of the claims 1 and 2, **characterized by** a filter sludge outlet (110) connected in a communicating manner to the intermediate space and discharging filter sludges from the device (10).

## Revendications

1. Dispositif (10) pour le traitement des eaux de ballast, équipé
- d'un boîtier (20) avec
- un dispositif d'entrée des eaux de ballast (30) disposé transversalement sur sa partie supérieure et
- d'un dispositif de sortie des eaux de ballast (40) disposé transversalement sur sa partie inférieure,
- d'un hydrocyclone (50) relié au dispositif d'entrée des eaux de ballast (30) avec
- une sortie d'évacuation des particules (60) situé sur la partie inférieure du boîtier, évacuant les particules présentes dans le dispositif (10) et
- une sortie (70) pour eaux de ballast appauvries en particules,
- un filtre (80) entourant l'hydrocyclone (50), qui répartit le dispositif (10) dans un espace intermédiaire situé entre l'hydrocylcone (50) et le filtre et dans un espace extérieur situé entre le filtre (80) et le boîtier (20), à savoir que l'espace intermédiaire est relié à et communique avec une sortie d'évacuation (70) de l'hydrocyclone (50) pour les eaux de ballast appauvries en particules, et
- des outils de production d'ultrasons (90) agissant sur l'espace extérieur et/ou le filtre (80),
- des outils de production d'ultraviolets (100) agissant sur l'espace extérieur et/ou le filtre (80), et
- des outils d'insertion d'un gaz dans l'espace extérieur du dispositif (10).

2. Dispositif (10) selon la revendication n°1 **caractérisé en ce que** l'entrée des eaux de ballast (30), l'hydrocyclone (50), le filtre entourant l'hydrocyclone (50), les outils de production des ultrasons (90) agissant sur l'espace extérieur et/ou sur le filtre (80) et les outils de production des ultraviolets (100) agissant sur l'espace extérieur et/ou sur le filtre (80) sont disposés de manière concentrique.

3. Dispositif (10) selon une des revendications 1 et 2, **caractérisé par** une sortie pour boues d'épuration (110) évacuant les boues d'épuration du dispositif (10), reliée à et communiquant avec l'espace intermédiaire.
